# FASCICULE DE BREVET EUROPEEN

(11) **EP 3 610 149 B1**
(45) Date de publication et mention de la délivrance du brevet: **07.12.2022**
(21) Numéro de dépôt: 18720313.8
(22) Date de dépôt: 12.04.2018
(51) Int. Cl.: F02G 3/02, F02G 5/02, F01K 23/10, F01K 23/06, F01K 23/14

(54) **ENSEMBLE DE TURBOPOMPE POUR UN CIRCUIT FERMÉ, EN PARTICULIER DE TYPE À CYCLE DE RANKINE, ASSOCIÉ À UN MOTEUR À COMBUSTION INTERNE, NOTAMMENT POUR VÉHICULE AUTOMOBILE**
TURBOPUMPENANORDNUNG FÜR EINEN GESCHLOSSENEN KREISLAUF, INSBESONDERE EINES RANKINE-ZYKLUS-KREISLAUFS, DER EINER BRENNKRAFTMASCHINE ZUGEORDNET IST, INSBESONDERE FÜR EIN KRAFTFAHRZEUG
TURBOPUMP ASSEMBLY FOR A CLOSED CIRCUIT, PARTICULARLY OF THE RANKINE CYCLE TYPE, ASSOCIATED WITH AN INTERNAL COMBUSTION ENGINE, IN PARTICULAR FOR A MOTOR VEHICLE

(30) Priorité: 14.04.2017 FR 1753271
(43) Date de publication de la demande: 19.02.2020
(73) Titulaire: IFP Energies nouvelles, 92852 Rueil-Malmaison (FR); Enogia, 13015 Marseille (FR)
(72) Inventeur: SMAGUE, Pascal, 92500 Rueil-Malmaison (FR); LEROUX, Arthur, 13001 Marseille (FR); HENRY, Gabriel, 13760 Saint-Cannat (FR); HOLAIND, Norman, 13090 Aix en Provence (FR)
(74) Mandataire: IFP Energies nouvelles
(86) Numéro de dépôt international: PCT/FR2018/000088
(87) Numéro de publication internationale: WO 2018/189435

(56) Documents cités:
- EP-A1- 2 762 713
- WO-A1-2013/046885
- DE-T5-112013 003 440
- US-A1- 2014 165 567
- US-A1- 2015 377 077

## Description

La présente invention se rapporte à un ensemble de turbopompe cinétique pour un circuit fermé, en particulier de type à cycle de Rankine, associé à un moteur à combustion interne, notamment pour véhicule automobile ou pour un véhicule poids lourds.

Un tel ensemble est décrit par exemple dans le documents EP 2 762 713 A1.

Par turbopompe cinétique il est entendu, un ensemble formé par une pompe et une turbine.

La pompe a la particularité selon laquelle son rotor porte une multiplicité d'ailettes radiales pour former un impulseur dont l'effet est la mise en rotation et l'accélération du fluide en condition liquide. Par l'effet de la rotation de l'impulseur de la pompe, le fluide est aspiré axialement, puis accéléré radialement et refoulé par la volute que comporte habituellement une turbopompe. La turbine, qui est raccordée à la pompe sur le même arbre, est constituée d'une partie statorique disposant d'un aubage fixe appelé diffuseur visant à convertir la pression du fluide en condition vapeur en énergie cinétique. Cette énergie cinétique est alors convertie en énergie mécanique au travers d'un aubage mobile de la partie rotorique de la turbine. Les aubages de la turbine sont constitués d'ailettes radiales permettant la détente du fluide qui est éjecté par la volute de sortie de la turbine.

Dans sa configuration principale les aubages de la turbine sont préférentiellement radiaux mais peuvent être également à profil axial.

Comme cela est largement connu, un cycle de Rankine est un cycle thermodynamique par lequel de la chaleur provenant d'une source de chaleur externe est transmise à un circuit fermé qui contient un fluide de travail. Au cours du cycle, le fluide de travail subit des changements de phase (liquide/vapeur).

Ce type de cycle se décompose généralement en une étape durant laquelle le fluide de travail utilisé sous forme liquide, est comprimé de manière isentropique, suivie d'une étape où ce fluide liquide comprimé est chauffé et vaporisé au contact d'une source de chaleur.

Cette vapeur est ensuite détendue, au cours d'une autre étape, dans une machine de détente, puis, dans une dernière étape, cette vapeur détendue est refroidie et condensée au contact d'une source froide.

Pour réaliser ces différentes étapes, le circuit comprend au moins une pompe pour faire circuler et comprimer le fluide sous forme liquide, un échangeur-évaporateur qui est balayé par un fluide chaud pour réaliser la vaporisation au moins partielle du fluide comprimé, une machine de détente pour détendre la vapeur, telle qu'une turbine, qui transforme l'énergie de cette vapeur en une autre énergie, comme une énergie mécanique ou électrique, et un échangeur-condenseur grâce auquel la chaleur contenue dans la vapeur est cédée à une source froide, généralement de l'air extérieur, ou encore un circuit d'eau de refroidissement, qui balaye ce condenseur, pour transformer cette vapeur en un fluide sous forme liquide.

Dans ce type de circuit, le fluide utilisé est généralement de l'eau mais d'autres types de fluides, par exemple des fluides organiques ou des mélanges de fluides organiques, peuvent également être utilisés. Le cycle est alors appelé Cycle de Rankine Organique ou ORC (Organic Rankine Cycle).

A titre d'exemple, les fluides de travail peuvent être du butane, de l'éthanol, des hydrofluorocarbures, de l'ammoniac, du dioxyde de carbone...

Comme cela est bien connu, le fluide chaud pour réaliser la vaporisation du fluide comprimé peut provenir de sources chaudes variées, telles qu'un liquide de refroidissement (d'un moteur à combustion, d'un processus industriel, d'un four, etc.), des gaz chauds résultant d'une combustion (fumées d'un processus industriel, d'une chaudière, gaz d'échappement d'un moteur à combustion ou d'une turbine, etc.), d'un flux de chaleur issu de capteurs solaires thermiques, etc.

Généralement et comme mieux décrit dans le document WO 2013/046885, la pompe et la turbine sont combinées en une seule pièce pour former une turbopompe de faible encombrement.

L'arbre de cette turbopompe, qui est commun à la pompe et à la turbine, est couplé au vilebrequin du moteur à combustion interne, généralement par une courroie entourant une poulie placée sur ce vilebrequin et une autre poulie placée sur l'arbre de la turbopompe.

De manière à pouvoir contrôler la turbopompe, un embrayage électromagnétique est placé entre l'arbre de la turbopompe et sa poulie pour pouvoir désaccoupler cette poulie de cet arbre.

### Cette disposition bien que donnant satisfaction présente des inconvénients non négligeables

En effet, elle nécessite que la pompe et la turbine de cette turbopompe fonctionnent au même régime de rotation représentant un multiple du régime de l'arbre du moteur auquel elles sont reliées ; ce régime de rotation étant tributaire du ratio des diamètres de poulies d'entrainement du vilebrequin et de la turbopompe retenus.

Le ratio étant limité par l'encombrement de ces poulies sur le moteur, il conditionne la typologie des machines de compression et détente utilisables dans ce concept de turbopompe et rend difficile notamment l'usage de turbines cinétiques couplées mécaniquement à un arbre moteur nécessitant des régimes de fonctionnement élevés.

La présente invention se propose de remédier aux inconvénients ci-dessus grâce à un dispositif de contrôle qui permet d'utiliser le circuit fermé à cycle de Rankine avec sa turbopompe dans toute sa plage de fonctionnement.

A cet effet, la présente invention vise un ensemble de turbopompe cinétique pour un circuit fermé, selon la revendication indépendante 1.

La voie de transmission de mouvement peut comprendre une poulie reliée au galet-enrouleur, une poulie portée par l'arbre de la turbopompe et une bande fermée sur elle-même reliant les deux poulies.

Le diamètre de la poulie reliée au galet-enrouleur peut être différent de celui de la poulie portée par l'arbre de la turbopompe.

La bande fermée sur elle-même peut comprendre une courroie.

La bande fermée sur elle-même peut comprendre une chaîne.

La voie de transmission de mouvement en rotation peut comprend un train d'engrenages.

L'arbre de la turbopompe peut porter un accouplement à commande contrôlée avec la poulie.

L'accouplement à commande contrôlée peut comprendre un embrayage électromagnétique.

Les autres caractéristiques et avantages de l'invention vont apparaître à la lecture de la description qui va suivre, donnée à titre uniquement illustratif et non limitatif, et à laquelle sont annexées :
- la figure 1 qui montre la face accessoires d'un moteur à combustion interne avec la turbopompe et
- La figure 2 qui est une vue en coupe partielle selon la ligne 2-2 de la figure 1.

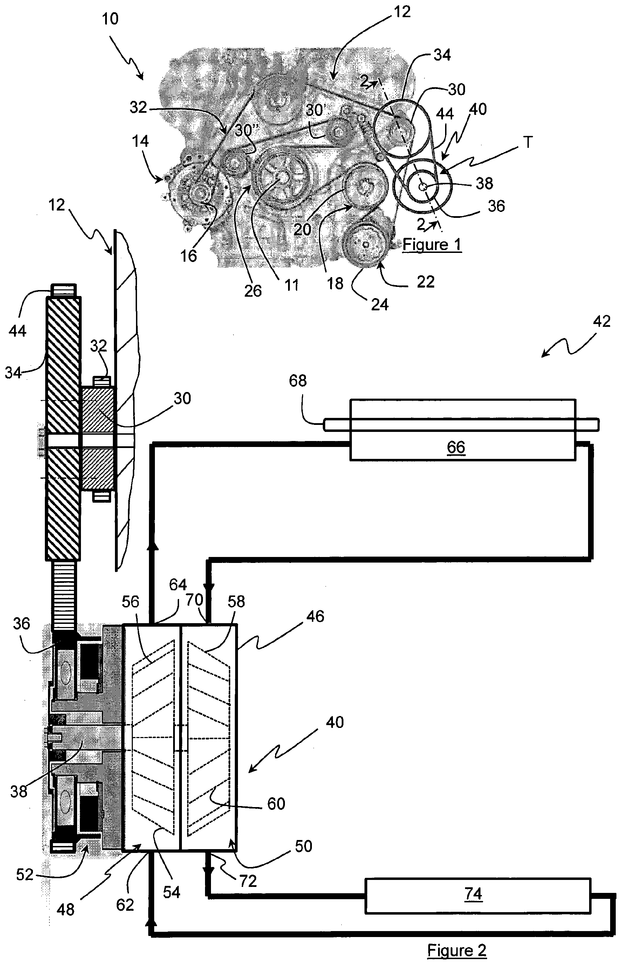

La figure 1 montre un moteur à combustion interne 10, en particulier pour un véhicule automobile, de type véhicule particulier ou véhicules poids lourds, avec un arbre-moteur 11. Ce moteur comprend une face 12, dite face accessoires, qui porte généralement une partie des accessoires nécessaires au fonctionnement de ce moteur et/ou au véhicule.

Le système comporte deux voies de transmission de mouvement de rotation séparées et différentes : une courroie de transmission de mouvement 32 pour l'entraînement des accessoires et une deuxième voie de transmission de mouvement de rotation 44, distincte de la courroie de transmission de mouvement 32, pour l'entraînement dédié et spécifique de la turbopompe.

A titre uniquement d'exemple, cette face accessoires porte un alternateur 14 pour l'alimentation électrique du moteur et/ou du véhicule avec une poulie d'alternateur 16, une pompe à eau 18 avec une poulie 20, pour le circuit de refroidissement de ce moteur et une pompe à huile 22 munie d'une poulie 24 pour la lubrification de certaines pièces de ce moteur.

Cette face accessoires comprend aussi une poulie de vilebrequin 26 qui est liée en rotation avec l'arbre-moteur 11 (ou vilebrequin) de ce moteur. Cette face porte également au moins un galet-enrouleur, ici trois galets-enrouleurs 30, 30' et 30", montés libre en rotation sur des axes de pivotement fixés sur cette face. Ces galets-enrouleurs sont particulièrement utilisés pour le guidage d'une courroie de transmission de mouvement de rotation 32.

Cette courroie est reliée aux différentes poulies pour permettre de transmettre le mouvement de rotation du vilebrequin à ces accessoires.

Cette face comprend aussi une poulie de liaison 34 qui est liée en rotation au galet-enrouleur 30 par tous moyens connus (tels que des vis représentées par des traits d'axes) pour l'entraînement en rotation d'une poulie 36 portée par l'arbre 38 d'une turbopompe 40 d'un circuit fermé 42 de type à cycle de Rankine (voir figure 2) au travers d'une bande fermée sur elle-même, comme une chaîne ou une courroie de liaison 44.

La turbopompe est ici une turbopompe cinétique et comprend un carter unique 46 avec une section dans laquelle est logé, sur l'arbre 38, un moyen de circulation et de compression d'un fluide 48, dit pompe, une autre section avec un moyen de détente d'un fluide comprimé 50, dit turbine, logé également sur l'arbre 38 et un accouplement à commande contrôlée 52, ici un embrayage de type électromagnétique, porté par l'arbre 38 pour contrôler l'accouplement de la poulie 36 avec cet arbre.

La pompe comprend un rotor de pompe 54 qui porte des ailettes 56 saillantes radialement et la turbine comprend également un rotor 58 muni d'ailettes 60 saillantes radialement.

Comme mieux visible sur la figure 1, la turbopompe est reliée au galet-enrouleur 30 par une voie de transmission de mouvement en rotation T qui comprend les poulies 34 et 36 ainsi que la courroie 44.

Bien entendu, il peut être prévu que cette voie de transmission de mouvement comprenne un train d'engrenages avec un pignon fixé sur le galet-enrouleur, un autre pignon fixé sur l'arbre de la turbopompe et, si nécessaire, au moins un pignon intermédiaire.

Cette turbopompe fait partie du circuit fermé à cycle de Rankine 42 qui est avantageusement de type ORC (Organic Rankine Cycle) et qui utilise un fluide de travail organique ou des mélanges de fluides organiques, comme du butane, de l'éthanol, des hydrofluorocarbures.

Il est bien entendu que le circuit fermé peut également fonctionner avec un fluide comme de l'ammoniac, de l'eau, du dioxyde de carbone...

La section de la turbopompe comprenant la pompe 48 est munie d'une entrée 62 du fluide de travail sous forme liquide et d'une sortie 64 de ce fluide de travail également sous forme liquide mais comprimé sous une pression élevée.

La sortie 64 de la pompe est reliée à un échangeur de chaleur 66, dénommé évaporateur, traversé par le fluide de travail comprimé et grâce auquel le fluide de travail ressort de cet évaporateur sous forme de vapeur comprimée.

Cet évaporateur est également parcouru par une source chaude 68, sous forme liquide ou gazeuse de manière à pouvoir céder sa chaleur au fluide de travail. Cette source chaude peut par exemple provenir des gaz d'échappement ou d'une autre source de chaleur du moteur à combustion interne 10.

La sortie de l'évaporateur est connectée à l'entrée 70 de la section de la turbopompe comprenant la turbine 60 pour y faire admettre le fluide de travail sous forme de vapeur comprimée à haute pression, ce fluide ressortant par la sortie 72 de cette turbine sous forme de vapeur détendue à basse pression.

La sortie 72 de la turbine est raccordée à un échangeur de refroidissement 74, ou condenseur, qui permet de transformer la vapeur basse pression détendue qu'il reçoit en un fluide liquide basse pression. Ce condenseur est balayé par une source froide, généralement un flux d'air ambiant ou d'eau de refroidissement, de manière à refroidir la vapeur détendue pour qu'elle se condense et se transforme en un liquide.

Bien entendu, les différents éléments du circuit sont reliés entre eux par des conduites de circulation de fluide permettant de les relier successivement.

Comme décrit plus haut, l'ensemble ainsi formé par le galet-enrouleur 30 et la poulie de liaison constitue une double poulie supportant à la fois la courroie des accessoires du moteur mais également la courroie dédiée à la turbopompe.

Pour pouvoir obtenir les rapports de vitesses souhaités entre la poulie de liaison 34 et la poulie 36 de la turbopompe, il suffit de paramétrer les diamètres de ces poulies pour obtenir ces rapports.

A titre d'exemple et comme illustré sur la figure1, le diamètre de la poulie de liaison 34 est sensiblement le double de celui de la poulie 36 de la turbopompe, ce qui procure un doublement de la vitesse de rotation de cette poulie par rapport à la poulie de liaison.

L'intérêt d'une telle configuration est multiple :
- Elle permet de coupler mécaniquement la turbopompe du circuit fermé au moteur sans modifier la face accessoires principale mais uniquement par l'ajout d'éléments sur celle-ci, ce qui permet de simplifier la mise en œuvre sur le moteur, notamment en "retrofit".
- Elle assure la transmission de puissance du moteur vers la turbopompe pour mettre en mouvement la pompe du circuit fermé.
- Elle assure la transmission de puissance de la turbopompe vers le moteur lorsque la turbine produit davantage de puissance que la consommation de la pompe.
- Elle permet un contrôle simple de la turbopompe avec un régime de fonctionnement imposé par le moteur.
- Elle permet, grâce à une série de deux étages de réduction en série, de réaliser un rapport de réduction élevé (6-10) entre la turbopompe et le moteur pour garantir une vitesse de fonctionnement suffisamment élevée à la turbopompe cinétique afin d'assurer un rendement satisfaisant à la turbine. Les turbines de type cinétique sont caractérisées par le fait que leurs pertes sont liées entre autre aux fuites internes entre les aubages et le carter de la roue. Des vitesses élevées permettent de limiter ces fuites internes et sont donc favorables à la performance de la turbine.

Ainsi, dans l'une des phases de fonctionnement, le circuit fermé n'est pas activé et le moteur à combustion interne est opérationnel. Dans cette phase, la turbopompe n'est pas entraînée suite à la position débrayée de l'embrayage 52 qui désolidarise l'arbre 38 de la poulie 36. La poulie de liaison 34 est entraînée en rotation par le galet-enrouleur 30 et cette rotation est retransmise à la poulie 36 de la turbopompe. Compte tenu de la position débrayée de l'embrayage, cette rotation de la poulie 36 n'est transmise ni à la pompe, ni à la turbine.

Dans la phase de démarrage du circuit fermé, le moteur à combustion interne est opérationnel et il est nécessaire de réaliser l'amorçage de la pompe 48 de la turbopompe. Pour ce faire, l'arbre 38 est accouplé à la poulie 36 de la turbopompe par l'embrayage 52. Le mouvement de rotation du galet-enrouleur 30 est transmis à la poulie de liaison 34 qui le transmet à son tour à la poulie de la turbopompe par la courroie de liaison 44. Ce mouvement de la poulie 34 est ensuite retransmis à la pompe par l'arbre 38 qui est accouplé à la poulie 36.

Dans une des phases de fonctionnement du circuit, la turbine produit de l'énergie qu'elle transmet au moteur à combustion interne lorsque cette turbine produit davantage de puissance que la consommation de la pompe.

Dans cette phase, le moteur à combustion interne est toujours opérationnel et l'arbre 38 est accouplé à la poulie 36 de la turbopompe par l'embrayage 52. La puissance générée par la turbine 60 est transmise à la poulie 36 de la turbopompe puis, par la courroie 44, à la poulie de liaison 34 qui la transmet ensuite au galet-enrouleur 30. La rotation du galet-enrouleur est communiquée aux accessoires par la courroie 32 et plus particulièrement à la poulie 26 de vilebrequin qui va apporter un surcroit de puissance à ce vilebrequin et par conséquent au moteur à combustion interne.

Dès que la puissance transmise devient insuffisante, c'est-à-dire que la turbine produit moins de puissance que la pompe n'en consomme, la turbopompe est rendue inopérationnelle par l'ouverture de l'embrayage.

La présente invention n'est pas limitée à l'exemple décrit ci-dessus mais englobe aussi la variante où l'accouplement à commande contrôlée peut être disposé entre le galet-enrouleur 30 et la poulie de liaison 34.

## Revendications

1. Ensemble de turbopompe cinétique pour un circuit fermé, en particulier de type à cycle de Rankine, comprenant une turbopompe (40) et un moteur à combustion interne (12) avec un arbre-moteur (26), notamment pour véhicule automobile ou camion, dans lequel une (10) des faces dudit moteur porte des accessoires (14, 18, 22) de ce moteur ainsi qu'au moins un galet-enrouleur (30, 30', 30") pour une courroie de transmission de mouvement en rotation (32) reliant au moins lesdits accessoires à l'arbre-moteur (26), **caractérisé en ce que** l'ensemble comprend une voie de transmission de mouvement en rotation (T) entre l'arbre (38) de la turbopompe et ledit galet-enrouleur, distincte de ladite courroie de transmission de mouvement (32).

2. Ensemble selon la revendication 1, **caractérisé en ce que** la voie de transmission de mouvement (T) comprend une poulie (34) reliée au galet-enrouleur (30), une poulie (36) portée par l'arbre (38) de la turbopompe et une bande fermée sur elle-même (44) reliant les deux poulies.

3. Ensemble selon la revendication 2, **caractérisé en ce que** le diamètre de la poulie (34) reliée au galet-enrouleur (30) est différent de celui de la poulie portée par l'arbre de la turbopompe.

4. Ensemble selon la revendication 2 ou 3, **caractérisé en ce que** la bande fermée sur elle-même comprend une courroie (44).

5. Ensemble selon la revendication 2 ou 3, **caractérisé en ce que** la bande fermée sur elle-même comprend une chaîne.

6. Ensemble selon la revendication 1, **caractérisé en ce que** la voie de transmission de mouvement en rotation comprend un train d'engrenages.

7. Ensemble selon l'une des revendications précédentes, **caractérisé en ce que** l'arbre (38) de la turbopompe porte un accouplement à commande contrôlée (52) avec la poulie (36).

8. Ensemble selon la revendication 7, **caractérisé en ce que** l'accouplement à commande contrôlée comprend un embrayage électromagnétique (52).

## Patentansprüche

1. Kinetische Turbopumpenanordnung für einen geschlossenen Kreislauf, insbesondere vom Typ mit Rankine-Kreisprozess, welche eine Turbopumpe (40) und eine Brennkraftmaschine (12) mit einer Antriebswelle (26) umfasst, insbesondere für ein Kraftfahrzeug oder einen Lastkraftwagen, wobei eine (10) der Seiten dieser Maschine Zubehörteile (14, 18, 22) dieser Maschine sowie mindestens eine Umlenkrolle (30, 30', 30") für einen Riemen zur Drehbewegungsübertragung (32), der mindestens die Zubehörteile mit der Antriebswelle (26) verbindet, trägt, **dadurch gekennzeichnet, dass** die Anordnung einen Weg der Drehbewegungsübertragung (T) zwischen der Welle (38) der Turbopumpe und der Umlenkrolle umfasst, der von dem Riemen zur Bewegungsübertragung (32) verschieden ist.

2. Anordnung nach Anspruch 1, **dadurch gekennzeichnet, dass** der Weg der Bewegungsübertragung (T) eine Scheibe (34), die mit der Umlenkrolle (30) verbunden ist, eine Scheibe (36), die von der Welle (38) der Turbopumpe getragen wird, und ein in sich geschlossenes Band (44), das die beiden Scheiben verbindet, umfasst.

3. Anordnung nach Anspruch 2, **dadurch gekennzeichnet, dass** der Durchmesser der Scheibe (34), die mit der Umlenkrolle (30) verbunden ist, von demjenigen der Scheibe, die von der Welle der Turbopumpe getragen wird, verschieden ist.

4. Anordnung nach Anspruch 2 oder 3, **dadurch gekennzeichnet, dass** das in sich geschlossene Band einen Riemen (44) umfasst.

5. Anordnung nach Anspruch 2 oder 3, **dadurch gekennzeichnet, dass** das in sich geschlossene Band eine Kette umfasst.

6. Anordnung Anspruch 1, **dadurch gekennzeichnet, dass** der Weg der Drehbewegungsübertragung einen Getriebezug umfasst.

7. Anordnung nach einem der vorhergehenden Ansprüche, **dadurch gekennzeichnet, dass** die Welle (38) der Turbopumpe eine Kupplung (52) mit der Scheibe (36) mit gesteuerter Betätigung trägt.

8. Anordnung nach Anspruch 7, **dadurch gekennzeichnet, dass** die Kupplung mit gesteuerter Betätigung eine elektromagnetische Kupplung (52) umfasst.

## Claims

1. Kinetic turbopump assembly for a closed circuit, in particular of the Rankine cycle type, comprising a turbopump (40) and an internal combustion engine (12) with a drive shaft (26), in particular for a motor vehicle or lorry, in which one (10) of the faces of said engine bears accessories (14, 18, 22) of this engine and also at least one winding roller (30, 30', 30") for a rotational movement transmission belt (32) connecting at least said accessories to the drive shaft (26), **characterized in that** the assembly comprises a rotational movement transmission path (T) between the shaft (38) of the turbopump and said winding roller, which is separate from said rotational movement transmission belt (32).

2. Assembly according to Claim 1, **characterized in that** the movement transmission path (T) comprises a pulley (34) connected to the winding roller (30), a pulley (36) borne by the shaft (38) of the turbopump and a strip that is closed on itself (44) connecting the two pulleys.

3. Assembly according to Claim 2, **characterized in that** the diameter of the pulley (34) connected to the winding roller (30) is different from that of the pulley borne by the shaft of the turbopump.

4. Assembly according to Claim 2 or 3, **characterized in that** the strip that is closed on itself comprises a belt (44).

5. Assembly according to Claim 2 or 3, **characterized in that** the strip that is closed on itself comprises a chain.

6. Assembly according to Claim 1, **characterized in that** the rotational movement transmission path comprises a gear train.

7. Assembly according to one of the preceding claims, **characterized in that** the shaft (38) of the turbopump bears a controlled coupling (52) with the pulley (36).

8. Assembly according to Claim 7, **characterized in that** the controlled coupling comprises an electromagnetic clutch (52).
